# EUROPÄISCHE PATENTSCHRIFT

(11) **EP 3 187 376 B1**
(45) Veröffentlichungstag und Bekanntmachung des Hinweises auf die Patenterteilung: **21.11.2018**
(21) Anmeldenummer: 17157053.4
(22) Anmeldetag: 05.08.2015
(51) Int. Cl.: B60R 16/03, B62D 5/00, B62D 5/30

(54) **FAHRZEUGSTEUERUNG FÜR EINE MOBILE ARBEITSMASCHINE**
VEHICLE CONTROL FOR A MOBILE WORKING MACHINE
COMMANDE DE VEHICULE POUR MACHINE DE TRAVAIL MOBILE

(30) Priorität: 12.08.2014 DE 102014012006
(43) Veröffentlichungstag der Anmeldung: 05.07.2017
(62) Teilanmeldung aus: 15179853.5
(73) Patentinhaber: Liebherr-Werk Bischofshofen GmbH, 5500 Bischofshofen (AT)
(72) Erfinder: Huber, Ferdinand, A-5531 Eben im Pongau (AT)
(74) Vertreter: Herrmann, Uwe

(56) Entgegenhaltungen:
- EP-A1- 1 314 628
- EP-A1- 1 574 418
- DE-A1-102005 013 440
- JP-A- 2004 322 976

## Beschreibung

Die Erfindung betrifft eine Fahrzeugsteuerung für eine mobile Arbeitsmaschine, wobei die Fahrzeugsteuerung eine oder mehrere redundant ausgeführte Baugruppen und mindestens eine gemeinsame Energiequelle zur Energieversorgung der ein oder mehreren Baugruppen umfasst, wobei die Energieversorgung der wenigstens einen redundant ausgeführten Baugruppe über mindestens zwei galvanisch getrennte Energieversorgungskreise sichergestellt ist.

Für das Aufrechterhalten sicherheitsrelevanter Funktionen spielt die Betrachtung gemeinsamer Fehlerursachen insbesondere für den Energieversorgungspfad der Steuerungen eine wesentliche Rolle. Steuerungen von sicherheitsrelevanter Funktion werden aufgrund der Normenvorgaben (ISO 13849, ISO 15998) zunehmend redundant oder mehrkreisig ausgeführt. Nachteilig an bekannten Implementierungen ist jedoch, dass diese Steuerungen auf einen einzelnen, gemeinsamen Energieversorgungspfad zurückgreifen, was zur Folge hat, dass die Energieversorgung das Nadelöhr der gesamten Kette darstellt.

Eine Unterbrechung im Energieversorgungspfad führt dazu, dass sämtliche Steuergeräte während des Betriebes ohne Vorankündigung ausfallen können, und selbst jene sicherheitsrelevanten Steuerungsvorgänge ihre Wirksamkeit verlieren, deren Funktionstüchtigkeit im Fehlerfall durch Installation redundanter Bauteile bis hin zur Mehrfachbestückung mit Steuergeräten hätte verbessert werden sollen.

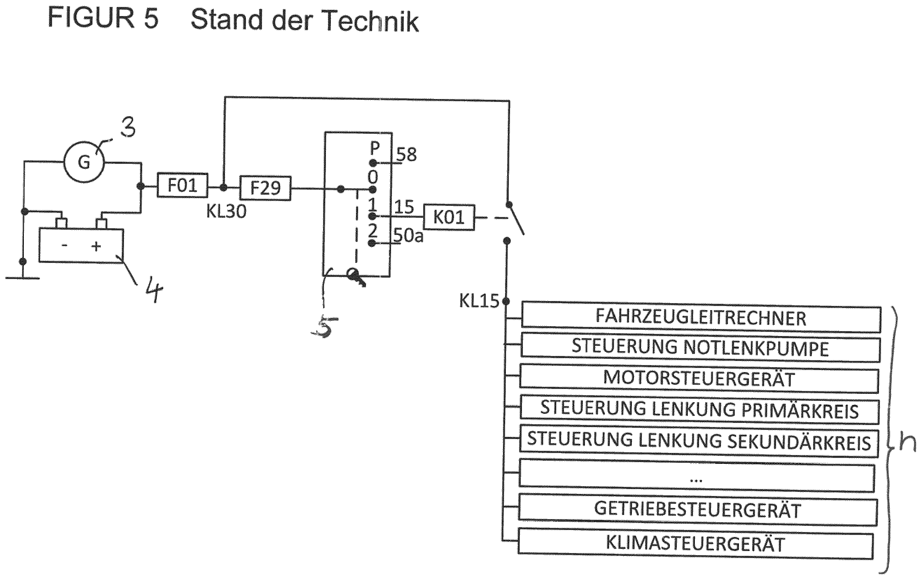

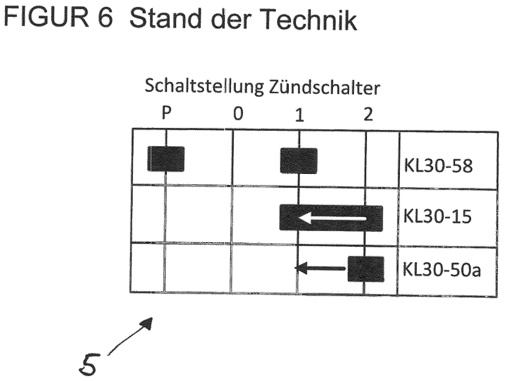

Den Aufbau eines Energieversorgungspfades mit den Hauptkomponenten, wie er üblicherweise in mobilen Arbeitsmaschinen unterschiedlichen Fabrikates eingesetzt wird, beschreibt Figur 5. Die beiden Energiequellen in Form des Generators 3 und der Batterie 4 werden über die Hauptsicherung F01 geführt. Die Stelle im Energieversorgungspfad nach der Hauptsicherung F01 wird in der Fahrzeugelektrik als Klemme 30 (Kl. 30) bezeichnet. Eine weitere Sicherung F29 befindet sich vor dem Zündstartschalter 5. Mit dem Zündstartschalter 5, der im Detail in Figur 6 wiedergegeben ist, wird in den Schaltstellungen 1 (Zündung ein) und 2 (Starten) das Relais K01 schließend betätigt, welches die Kl. 30 schaltet, wobei dieser Punkt als Klemme 15 (Kl. 15) bezeichnet wird. An der Kl. 15 verzweigt sich die Energieversorgung sämtlicher Steuerungssysteme 100 im Fahrzeug.

Eine Unterbrechung der Energieversorgung durch den Ausfall der Kl15 zieht einen Ausfall sämtlicher Steuergeräte und -systeme 100 mit sich, selbst jener, die gerade deshalb redundant ausgeführt wurden, um sicherheitsrelevante Funktionen im Fehlerfall aufrecht erhalten zu können. Die Leitungsunterbrechung an der Hauptsicherung F01 und an der Sicherung F29 vor dem Zündschloss oder eine Leitungsunterbrechung im geschalteten Zustand am Zündschloss 5 durch Kontaktkorrosion, oder das selbsttätiges Öffnen des Relais K01 im geschalteten Zustand würde zum Totalausfall aller Steuerungssysteme 100 führen.

Insbesondere für Sicherungen wirkt die Argumentation des Fehlerausschlusses befremdlich, da Sicherungen gerade deshalb eingebaut werden, um im Fahrzeugbetrieb als Sollbruchstelle gezielt eine Leitungsunterbrechung herbeizuführen.

Aus der DE 10 2005 013 440 A1 ist eine Stromversorgungsschaltung für ein Kraftfahrzeug bgekannt, die aus zwei Bordnetzen mit redundant vorgesehenen Komponenten besteht. Die Bordnetze stehen mit einem gemeinsamen Energieerzeuger in Verbindung und werden von diesem über galvanisch getrennte Energieversorgungskreise versorgt.

Die Aufgabe der vorliegenden Erfindung besteht darin, vorbekannte Systeme hinsichtlich der Ausfallwahrscheinlichkeit zu verbessern.

Gelöst wird diese Aufgabe durch eine Fahrzeugsteuerung für eine mobile Arbeitsmaschine gemäß den Merkmalen des Anspruchs 1. Vorteilhafte Ausgestaltungen der Fahrzeugsteuerung sind Gegenstand der sich an den Hauptanspruch anschließenden Unteransprüche.

Bei der gattungsgemäßen Fahrzeugsteuerung für eine mobile Arbeitsmaschine umfasst die Fahrzeugsteuerung ein oder mehrere redundant ausgeführte Baugruppen, worunter im Rahmen der vorliegenden Erfindung auch Systeme bzw. Fahrzeugsystem und insbesondere Steuereinheiten zu verstehen sind. Insbesondere sind hierunter unterschiedliche Steuereinheiten zu verstehen, die für den Betrieb, Steuerung und Regelung gewisser Fahrzeugfunktionen zuständig sind. Betrachtet werden hierbei sicherheitsrelevante Baugruppen, insbesondere Steuereinheiten, oder ganze Fahrzeugsysteme, insbesondere Lenksysteme, deren Ausfall für den Maschinenbetrieb weitreichende Konsequenzen hätte. Aus diesem Grund werden sicherheitshalber, unter Umständen aufgrund gewisser Normvorgaben, ein oder mehrere Baugruppen bzw. zumindest Teile der Systeme redundant ausgeführt. Die Art der Redundanz spielt zunächst eine untergeordnete Rolle. Die redundant ausgeführten Baugruppen bzw. Systeme umfassen mindestens eine gemeinsame Energiequelle. Der Einfachheit halber wird im Folgenden nurmehr von redundant ausgeführten Baugruppen gesprochen, die nachfolgenden vorteilhaften Ausführungen gelten gleichermaßen für redundant ausgeführte Systeme.

Bei der mobilen Arbeitsmaschine kann es sich um eine Baumaschine, bevorzugt eine Erdbewegungsmaschine, besonders bevorzugt einen Radlader handeln. Die wenigstens eine gemeinsame Energiequelle kann ein Generator sein, der über den Hauptantrieb der Arbeitsmaschine antreibbar ist. Zusätzlich oder alternativ kann die Energiequelle einen Energiespeicher umfassen.

Erfindungsgemäß ist vorgesehen, dass auch die Energieversorgung der redundant ausgeführten Baugruppen gegen Störung innerhalb der Energieversorgungspfade geschützt werden soll, um die Ausfallwahrscheinlichkeit derartiger Systeme deutlich zu verringern. Demnach ist vorgesehen, dass die Energieversorgung der wenigstens einen redundant ausgeführten Baugruppe über mindestens zwei galvanisch getrennte Energieversorgungskreise (Energieversorgungspfade) sichergestellt ist. Unter einer galvanischen Trennung ist die entsprechende Implementierung eines Leitungsschutzes zu verstehen, beispielsweise durch Einfügen einer Sicherung, insbesondere einer elektronischen Sicherungsschaltung, sodass bei möglichen Überspannungen, Überströmen etc. eine Notunterbrechung des Energieversorgungskreises gewährleistet ist.

Das Vorsehen eines einzigen Energieversorgungskreis hätte zur Konsequenz, dass beim Auslösen des integrierten Leitungsschutzes beide Bauteile der redundant ausgeführten Baugruppen stromlos sind und die implementierte Redundanz wertlos war.

Die erfindungsgemäße Lösung schlägt nunmehr vor, dass ebenfalls die Energieversorgung der redundant ausgeführten Baugruppen redundant ist, d. h. über mindestens zwei galvanisch getrennte Energieversorgungskreise sichergestellt wird, sodass für beide Baugruppen durch Sicherung abgesicherte Energieversorgungskreise zur Verfügung stehen. Beim Ausfall eines Energieversorgungskreises übernimmt der wenigstens eine zweite Energieversorgungskreis, wobei dieser ebenfalls den notwendigen Leitungsschutz umfasst. Besonders sinnvoll ist es, wenn ein Bauteil durch den einen Energieversorgungskreis versorgbar ist und das dazu redundant ausgeführte Bauteil durch den weiteren Energieversorgungskreis versorgbar ist.

Die vorgeschlagene technische Implementierung kommt -in einer nicht von der Erfindung umfassten Art und Weise- bei der Energieversorgung der Lenkanlage einer mobilen Arbeitsmaschine zum Einsatz, insbesondere bei Lenkanlagen in Form einer elektrohydraulischen Lenkanlage. Der Aufbau derartiger Lenkanlagen besteht aus einer redundanten Lenksteuerung, umfassend eine Steuerung für den Primärkreis der Lenkanlage und eine Steuerung für den Sekundärkreises der Lenkanlage. Die erforderlichen Lenksteuerungen werden jeweils über einen der wenigstens zwei galvanisch getrennten Energieversorgungskreise mit der benötigten Energie versorgt.

Dabei dient ein erster galvanisch getrennter Energieversorgungskreis zur Versorgung wenigstens eines Fahrzeugleitrechners, wenigstens einer Steuerung des Lenkprimärkreises und wenigstens einer Steuerung der Notlenkpumpe der Lenkanlage, während ein zweiter galvanisch getrennter Energieversorgungskreis wenigstens eine Steuerung des Hauptantriebes und wenigstens eine Steuerung des Sekundärkreises der Lenkanlage versorgt. Der Hauptantrieb steht für die primäre Energiequelle, die für die Bereitstellung der Lenkfunktion notwendig ist. Bei elektrohydraulischen Lenkanlagen stellt der Hauptantrieb den benötigten Öldruck der Lenkanlage bereit. Bei mobilen Arbeitsmaschinen ist dies regelmäßig der Verbrennungsmotor, insbesondere ein Dieselaggregat.

Die vorgeschlagene Konstellation und Aufteilung der Baugruppen auf die Versorgungskreise ermöglicht eine Aufrechterhaltung der Lenkfunktion der Maschine auch bei einem Fehlerfall in einem der Energieversorgungspfade bzw. einer bestimmten Baugruppe. Im Fall einer Leitungsunterbrechung im ersten Energieversorgungskreis würde der Fahrzeugleitrechner, der Primärsteuerkreis der Lenkung als auch die Steuerung der Notlenkpumpe ausfallen. Da jedoch der Hauptantrieb weiterhin über den zweiten Energieversorgungskreis auf Leerlaufdrehzahl gehalten werden kann, ist es möglich, die Lenkung des ausrollenden Fahrzeuges weiterhin mit Öl zu versorgen und den Ölfluss über den Sekundärkreis der Lenkung bis zum Fahrzeugstillstand zu steuern.

Eine Leitungsunterbrechung im zweiten Energieversorgungskreis während der Fahrt hätte den Ausfall des Hauptantriebsaggregates der Maschine zur Folge, wodurch die Ölförderung für die Lenkanlage durch die Hauptlenkpumpe eingestellt würde. Der Ausfall der Hauptlenkpumpe würde jedoch durch den Fahrzeugleitrechner erkannt werden und zur Abhilfe eine Aktivierung der Notlenkpumpe, vorzugsweise der elektrisch angetriebenen Notlenkpumpe, auslösen. In diesem Fall kann das Fahrzeug mit der Steuerung des Primärkreises der Lenkung sicher zum Stillstand gebracht werden.

Die Erfindung wirkt sich vorteilhaft hinsichtlich der Zuverlässigkeit einer konventionellen, hydraulischen Lenkrad-Drehschieberlenkung im Fehlerfall der Leitungsunterbrechung im Energieversorgungspfad aus. In diesem Fall wird als redundant ausgeführte Baugruppe das Zusammenspiel aus Hauptantriebsaggregat zum Antrieb der Hauptlenkpumpe und einer Notlenkpumpe verstanden. Bei der Erfindung wird das Steuergerät des Hauptantriebes mit einem ersten galvanisch getrennten Energieversorgungskreis versorgt, während ein Fahrzeugleitrechner und eine elektrisch getriebene Notlenkpumpe durch einen weiteren galvanisch getrennten Energieversorgungskreis gespeist werden.

Bisher kam es bei einem einkanaligen Energieversorgungspfad gemäß dem Stand der Technik (Fig. 5) zum Ausfall des Dieselmotors (Hauptantriebsaggregat) bzw. der Hauptlenkpumpe und des Fahrzeugleitrechners, womit die Möglichkeit verloren ginge, die elektrisch angetriebene Notlenkpumpe anzusteuern. Eine hydraulische Lenkrad-Drehschieberienkung würde in diesem Fehierfail nicht mehr mit Öl versorgt werden, und die Lenkfähigkeit des Fahrzeuges daher verloren gehen.

Gemäß dem Vorschlag der Erfindung und die Aufteilung auf redundante Energieversorgungskreise kann die Zuverlässigkeit der Notlenkfähigkeit konventioneller, hydraulischer Lenkrad-Drehschieberlenkungen bei Arbeitsmaschinen, insbesondere bei Radladern erhöht werden, da auch bei Ausfall des Antriebsteuergerätes und dem damit verbunden Ausfall des Hauptantriebes bzw. der Hauptlenkpumpe eine Energieversorgung des Fahrzeugleitrechners und ein Betrieb der Notlenkpumpe sichergestellt ist. Die Verwendung von elektrischen Notlenkpumpen ist ohnehin ein Radlader-typisches Merkmal, das für den Großteil der Hersteller zutrifft.

Die wenigstens zwei galvanisch getrennten Energieversorgungskreise zeichnen sich sinnvoller Weise durch ein oder mehrere redundant zueinander ausgeführten Sicherungen und ein oder mehrere redundant zueinander ausgeführten Schaltrelais aus. Denkbar ist es, dass beide Energieversorgungskreise identisch zueinander ausgeführt sind, d. h. identische Sicherungen und identische Schaltrelais in den jeweiligen Kreisen Verwendung finden. Möglich ist jedoch auch eine diversitär ausgeführte Redundanz der beiden Energieversorgungskreise.

Möglich ist es ebenfalls, dass ein Zündstartschalter zur Aktivierung der Energieversorgung vorgesehen ist. In einem ersten Ausführungsbeispiel ist es denkbar, dass ein gemeinsamer Zündstartschalter zur parallelen Schaltung der redundanten Relais, d. h. zur redundanten Steuerung beider Energieversorgungskreise, vorgesehen ist In diesem Fall ist es sinnvoll, dass der Zündstartschalter ohne galvanische Trennung mit der gemeinsamen Energiequelle verbunden ist, sodass der Zündstartschalter beim Auftreten eines Fehlerfalls in einem der Energieversorgungskreise weiterhin zur Verfügung steht.

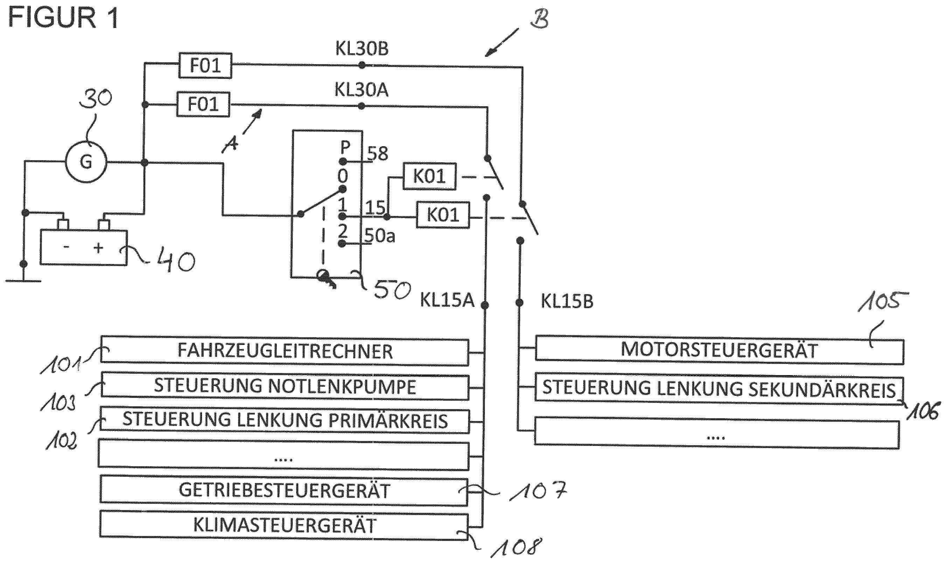

In einer alternativen Ausgestaltung besteht die Möglichkeit, dass der Zündstartschalter selbst ebenfalls redundant ausgeführt ist, d. h. für jeden Energieversorgungskreis jeweils ein Zündstartschalter zur Verfügung steht. Beide Zündstartschalter müssen bzw. sollten gleichzeitig betätigbar sein, beispielsweise durch eine gemeinsame Mechanik. Alternativ ist ebenfalls denkbar, dass ein gemeinsamer Zündstartschalter vorgesehen ist, der zwei- oder mehrkreisig ausgeführte Schaltstellungen ermöglicht, um die Aktivierung/Deaktivierung der wenigstens zwei Versorgungskreise zu ermöglichen. Beide Schalter sind idealerweise über eine gemeinsame Mechanik betätigbar. Derer Vorteil dieser Lösung besteht darin, dass für den Zündstartschalter anders als in Figur 1 eine Absicherung für den Fehlerfall erreicht wird.

Es besteht ebenfalls die Möglichkeit, dass wenigstens ein Energieversorgungskreis wenigstens einen Zündstartschalter aufweist, der mit einer entsprechenden Logikeinheit des wenigstens einen weiteren Energieversorgungskreises kommunikativ verbunden ist. In diesem Fall ist es denkbar, dass der Zündstartschalter des ersten Energieversorgungskreises die regulären Baugruppen bzw. Steuereinheiten des Fahrzeuges mit Energie versorgt und entsprechend schaltet. Die redundant dazu ausgeführten Baugruppen werden über einen zweiten Energieversorgungskreis versorgt und geschaltet, der die entsprechende Logikeinheit aufweist, die kommunikativ mit dem Zündstartschalter des ersten Energieversorgungskreises in Verbindung steht.

Insbesondere ist es sinnvoll, dass die Logikeinheit die Funktion des Zündstartschalters bzw. des ersten Energieversorgungskreises überwacht. Dies kann insbesondere dadurch erfolgen, dass ein oder mehrere Ausgänge, insbesondere Schaltstellungen und/oder Ein- und Ausgangswerte des Zündstartschalters, durch die Logikeinheit überwacht und geprüft und vorzugsweise gegen entsprechende Referenzwerte verglichen werden. Insbesondere ist der Vergleich mit einer Wahrheitstabelle sinnvoll, die die einzelnen Zustände der abgegriffenen Signale überprüft und auf deren Logik hin analysiert. Im Fehlerfall wird ein derartiger Zustand erkannt und die Logikeinheit schaltet ein oder mehrere Baugruppen des weiteren Energieversorgungskreises. Der Begriff Schalten steht hierbei für die Aktivierung/Deaktivierung der Energieversorgung dieser Baugruppen durch den weiteren Energieversorgungskreis. Denkbar ist es, Baugruppen des weiteren Energieversorgungskreises unterschiedlich zu schalten, beispielsweise wird die Energieversorgung eines Teils der Baugruppen im Fehlerfall deaktiviert während andere Baugruppen aktiviert werden.

Die Schaltung kann über zwischengeschaltete Relais erfolgen, die die Energieversorgung aus der gemeinsamen Energiequelle schalten bzw. unterbrechen. Denkbar ist es ebenfalls, dass die Energieversorgung unmittelbar über eine Versorgungsleitung der Logikeinheit erfolgt.

Ebenfalls sinnvoll ist es, die Logikeinheit mit einem zusätzlichen Diagnoseausgang auszustatten, der vorzugsweise zur Anbindung an eine übergeordnete Steuerung, insbesondere den Fahrzeugleitrechner, dient. Damit lässt sich ebenfalls ein Ausfall der Logikeinheit zuverlässig erkennen.

Die Ausführungsvariante ist gegenüber der Variante mit mehrkreisigem Zündstartschalter kostengünstiger, da keinen nennenswerten Extrakosten für die Entwicklung des Zündstartschalters anfallen.

Neben der erfindungsgemäßen Fahrzeugsteuerung umfasst die vorliegende Erfindung eine mobile Arbeitsmaschine mit einer entsprechenden Fahrzeugsteuerung. Offensichtlich zeichnet sich die mobile Arbeitsmaschine durch dieselben Vorteile und Eigenschaften wie die erfindungsgemäße Fahrzeugsteuerung aus, weshalb an dieser Stelle auf eine wiederholende Beschreibung verzichtet wird.

Des Weiteren betrifft die Erfindung eine Logikeinheit, beispielsweise in Form eines programmierbaren Relais, zur Anbindung an einen Zündstartschalter und Integration in eine Fahrzeugsteuerung gemäß der vorliegenden Erfindung. Erfindungsgemäß ist die Logikeinheit derart programmiert, sodass diese ein oder mehrere Zustände des Zündstartschalters bzw. eines externen Energieversorgungskreises überwacht und gegen einen oder mehrere Wahrheitstabellen vergleicht. Im Fehlerfall sind ein oder mehrere Ausgänge der Logikeinheit schaltbar, sodass über ein Relais beispielsweise die Energieversorgung ein oder mehrerer angeschlossener Baugruppen aktiviert oder unterbrochen werden kann.

Von der Erfindung umfasst soll ebenfalls ein Zündstartschalter für eine mobile Arbeitsmaschine sein, wobei sich der Zündstartschalter erfindungsgemäß zur Anbindung an eine Logik gemäß der Erfindung eignet.

Zuletzt betrifft die Erfindung einen alternativen Zündstartschalter für eine mobile Arbeitsmaschine der sich erfindungsgemäß durch zwei- oder mehrkreisig ausgebildete Schaltstellungen auszeichnet, sodass der Zündstartschalter parallel zwei oder mehrere angeschlossene Relais schalten kann und damit die Energieversorgung von mindestens zwei separaten Energieversorgungskreisen betätigen bzw. aktivieren oder deaktiveren kann.

Weitere Einzelheiten und Vorteile der Erfindung sollen im Folgenden anhand der in den Figuren dargestellten Beispiele näher erläutert werden. Es zeigen:
- Figur 1:: eine schematische Schaltbilddarstellung der Fahrzeugsteuerung gemäß einer ersten Variante,
- Figur 2:: eine schematische Schaltbilddarstellung der Fahrzeugsteuerung gemäß einer zweiten Variante,
- Figur 3:: eine schematische Schaltbilddarstellung der Fahrzeugsteuerung gemäß einer dritten Variante,
- Figur 4:: eine Darstellung der Zündschlossbelegung,
- Figur 5:: eine schematische Schaltbilddarstellung einer Fahrzeugsteuerung gemäß dem Stand der Technik und
- Figur 6:: eine Darstellung der Zündschlossbelegung eines Zündstartschalters gemäß dem Stand der Technik.

Die vorliegende Erfindungsmeldung löst dieses grundsätzliche Problem und verhilft sicherheitsrelevanten Steuerungssystemen zu einer vollwertigen Redundanz, insbesondere nach den Regeln der 1-Fehler-Betrachtung nach DIN EN ISO 13849.

Um die Funktionstüchtigkeit sicherheitsrelevanter Steuerungsvorgänge auch im Fehlerfall sicherstellen zu können, ist es erforderlich, die Steuergeräte der einzelnen Antriebe auf zumindest zwei getrennte elektrische Versorgungspfade aufzuteilen. In den Beispielen der Figuren 1 bis 3 werden die galvanisch getrennten Energieversorgungskreise nachfolgend mit A für den ersten Versorgungspfad und mit B für den zweiten Versorgungspfad gekennzeichnet. Der Pfad A umfasst die Klemmen Kl30A/Kl15A, während der Pfad B die Klemmen Kl30B/Kl15B aufweist.

Die erfindungsgemäße Lösung wird exemplarisch am Beispiel einer elektrohydraulischen Lenkung einer Baumaschine, insbesondere eines Radladers erläutert. Der Einsatz der Lösung ist jedoch auch für den Einsatz anderer sicherheitsrelevanter Systeme denkbar, die eine Versorgung mit elektrischer Energie benötigen.

Das wesentliche Merkmal dieser Erfindungsmeldung liegt darin, die Energiebereitstellung für das sicherheitsrelevante Steuerungssystem auf zumindest zwei galvanisch getrennte Pfade aufzuteilen. Pfad A dient dabei zur Energieversorgung des Fahrzeugleitrechners 101, der Steuerung des Primärkreises der elektrohydraulischen Lenkung 102 und der Steuerung Notlenkpumpe 103. Pfad B soll die Energieversorgung der Motorsteuerung 105 des Dieselaggregates der Baumaschine und der Steuerung des Sekundärkreises der elektrohydraulischen Lenkung 106 sicherstellen. Die Maschine kann anstatt des Dieselaggregates auch eine andere Energiequelle zum Antrieb der Hauptlenkpumpe aufweisen, dessen gegebenenfalls vorhandenes Steuergerät dann durch den Pfad B versorgt werden würde.

Bereits durch die beschriebe Aufteilung der Komponenten auf die galvanisch getrennten Energieversorgungskreise A, B kann eine Aufrechterhaltung der Lenkfunktion bei einem Fehler innerhalb der Versorgungspfade A, B sichergestellt werden.

Bei einer Leitungsunterbrechung im Versorgungspfad A während der Fahrt fällt der Fahrzeugleitrechner 101, der Primärsteuerkreis der Lenkung 102 sowie die Steuerung der Notlenkpumpe 103 aus. Da jedoch der Dieselmotor 105 aufgrund der Energieversorgung des Steuergerätes über den Energieversorgungsast B trotzdem auf Leerlaufdrehzahl gehalten werden kann, ist es möglich, die Lenkung des ausrollenden Fahrzeuges mit Öl zu versorgen und den Ölfluss über den Sekundärkreis 106 der elektrohydraulischen Lenkung bis zum Fahrzeugstillstand zu steuern.

Eine Leitungsunterbrechung im Versorgungsast B während der Fahrt hätte zur Folge, dass der Dieselmotor durch die Versorgungsunterbrechung des Motorsteuergerätes 105 abgestellt würde, weshalb durch die Hauptlenkpumpe kein Öl für das Weiterlenken bereitgestellt werden könnte. Die Fahrzeugsteuerung 101 erkennt den Ausfall der Energieversorgung bzw. das Abstellen des Dieselmotors und schaltet als Konsequenz die elektrisch angetriebene Notlenkpumpe über deren Steuerung 103 zu. Das Fahrzeug kann mit der Steuerung 102 des Primärkreises der Lenkung sicher zum Stillstand gebracht werden.

Die Ausführung dieser Auftrennung soll anhand von drei Lösungsvorschlägen beschrieben werden, wobei dies keinesfalls eine Einschränkung für weitere Ausführungsmöglichkeiten der Auftrennung der Energiebereitstellung sein sollte, sondern vielmehr als Beispiele für das Erreichen der im Vordergrund stehenden Funktionstüchtigkeit im Fehlerfall gesehen werden sollen:

Gemäß einer ersten Variante, dargestellt in der Figur 1, werden zwei galvanisch getrennte Versorgungspfade A, B bereitgestellt, die an die gemeinsame Energiequelle in Form eine Generators 30 und eines dazu parallel geschalteten Energiespeichers 40 angebunden sind. Beide Pfade A, B sind über eigene aber identische Sicherungen F01 galvanisch getrennt. Der Zündstartschalter 50 ist ohne Sicherungsmittel direkt mit dem Generator 30 und dem Energiespeicher 40 verbunden.

Die vorgeschlagene Verdrahtung lässt den Einsatz eines konventionellen Zündstartschalters 50 zu. Der Zündstartschalter 50 weist die Schaustellung 0 für Zündung aus, Schaltstellung 1 für Zündung ein und eine Schaltstellung 2 für Starten auf. In den Stellungen 1 und 2 werden die beiden redundanten Relais K01 schließend betätigt, wodurch die Klemmen Kl30A, KL30B der beiden Pfade A, B mit den Klemmen KL15A, KL15B geschaltet werden und die Energieversorgung aller Steuergeräte 101, 102, 103, 105, 106 sichergestellt ist.

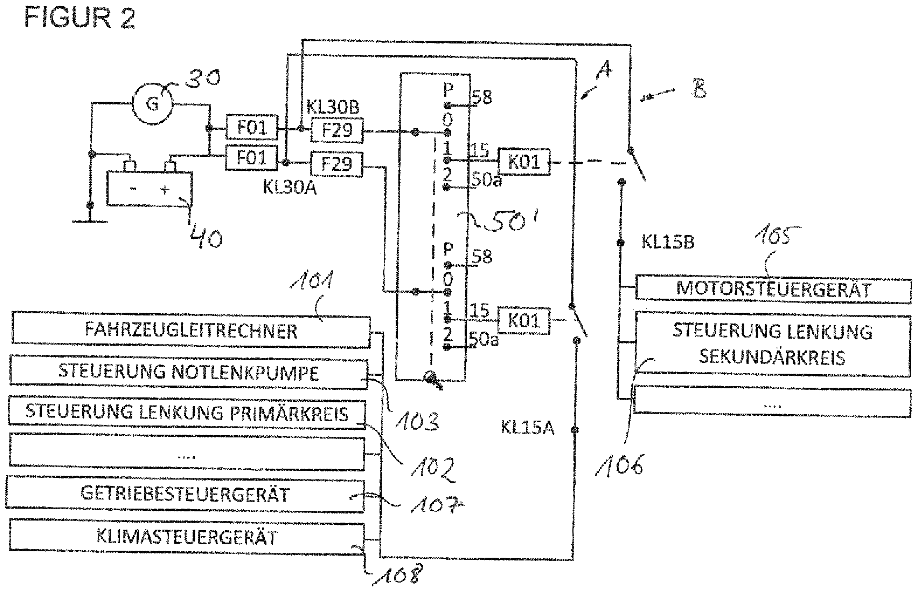

Eine weitere Variante ist in Figur 2 dargestellt. Gleiche Bauteile sind mit identischen Bezugszeichen zur Figur 1 versehen. In dieser Variante sind sämtliche Bauteile dupliziert. Die beiden Energiequellen in Form des Generators 30 und der Batterie 40 werden für beide Pfade A, B über die redundante Hauptsicherung F01 geführt. Die Stelle im Energieversorgungspfad A, B nach der Hauptsicherung F01 wird wiederrum als Klemme KL30A, KL30B bezeichnet. Nach der Klemme ist in jedem Pfad A, B eine weitere Sicherung F29 vorgesehen, die vor dem gemeinsamen Zündstartschalter 50' liegt. Die elektrischen Schaltstellungen des Zündstartschalters 50' sind zweikreisig ausgeführt, werden jedoch über eine gemeinsame Mechanik geschaltet. Für beide Schaltkreise sind die bekannten Schaltstellungen 0, 1 und 2 verfügbar, wobei beide Schaltkreis des Zündstartschalters 50' jeweils ein Relais K01 der Pfade A, B betätigen. Folglich werden in den Schaltstellungen 1, 2 die Klemmen KL15A, KL15B mit jeweils zugeordneten Klemme KL30A, KL30B geschaltet und die Steuergeräte 101, 102, 103, 105, 106 von ihrem jeweiligen Pfad A, B mit Energie versorgt.

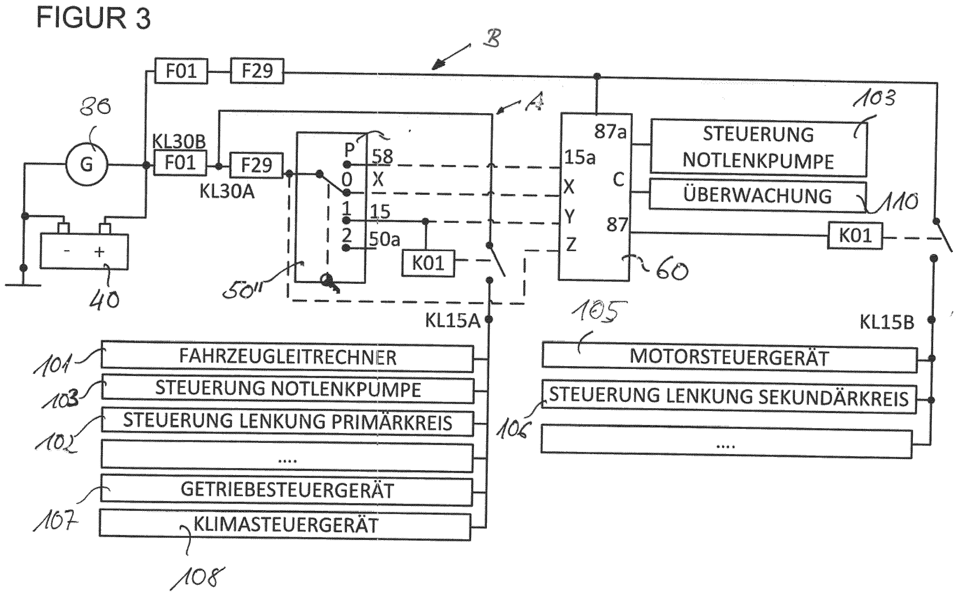

Eine weitere Lösung ist in Figur 3 dargestellt. Darin ist der Versorgungspfad A identisch zur Lösung aus dem Stand der Technik ausgeführt, d.h. die beiden Energiequellen in Form des Generators 30 und der Batterie 40 werden über die Hauptsicherung F01 geführt. Eine weitere Sicherung F29 befindet sich vor dem Zündstartschalter 50" mit den bekannten Schaltstellungen zur Betätigung des Relais K01. An der KI15A sind der Fahrzeugleitrechner 101, die Steuerung der Notlenkpumpe 103 und die Steuerung des Primärkreises der Lenkung 102 angeschlossen.

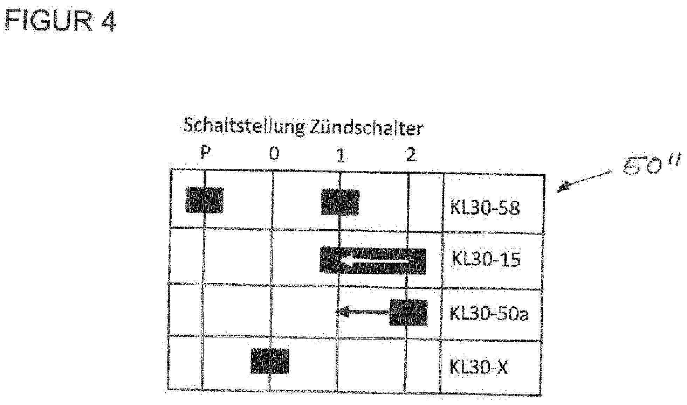

Der Zündstartschalter 50" erhält jedoch einen zusätzlichen Anschlusskontakt Pin X für seine Null- bzw. Aus-Stellung. Die Überwachung der Aus-Stellung am Pin X wird in eine eigenständige Logik 60 eingelesen, die Bestandteil des Versorgungspfades B ist. Die eigenständige Logik 60 überwacht des Weiteren die Spannungsversorgung unmittelbar vor dem Zündstartschalter am Z sowie den Schaltausgang des Zündstartschalters am Pin Y. Figur 4 gibt eine Übersicht über die Schaltstellungen des Zündstartschalters 50", d.h. welche Schalterausgänge in den entsprechenden Schaltstellungen geschaltet sind. Oben aufgetragen sind die Schaltstellungen und rechts die geschalteten Ausgänge. Die schwarzen Balken symbolisieren die gewählte Schaltstellung.

Die überwachten Werte werden durch die eigenständige Logik 60 verglichen und entsprechende Maßnahmen basierend auf einer Wahrheitstabelle ermittelt. Die in der Wahrheitstabelle definierten Zustände erlauben die Interpretation der Schaltzustände hinsichtlich Fehler im Energieversorgungspfad A, wodurch unterschieden werden kann, ob der Maschinenführer die Maschine gezielt abstellen möchte, oder ein Bauteilfehler vorliegt, der die Maschine und deren Funktionen ungewollt lahmlegen würde.

Entsprechend der Wahrheitstabelle entscheidet die eigenständige Logik 60, ob der Energieversorgungspfad B über den Pin 87 und das Relais K01 ein- oder ausgeschaltet werden soll. Im Falle eines Bauteilfehlers im Pfad A steuert die eigenständige Logik 60 über den Pin 87a ein Relais an, um die elektrisch angetriebene Notlenkpumpe 103 zu aktvieren.

Weiterhin verfügt die eigenständige Logik 60 über einen Diagnoseausgang C, um deren Funktionsverlust während des Betriebes durch den Fahrzeugleitrechner 101 zielsicher feststellen zu können.

Neben den genannten Steuereinheiten 101, 102, 103, 105, 106 können weitere Steuerungen, wie das Getriebesteuergerät 107 oder das Klimasteuergerät 108 durch einen der Pfade A, B versorgt werden.

## Patentansprüche

1. Fahrzeugsteuerung für eine mobile Arbeitsmaschine, umfassend:
eine redundant ausgeführte Baugruppe, und
eine gemeinsame Energiequelle zur Energieversorgung der Baugruppe, wobei
die Energieversorgung der redundant ausgeführten Baugruppe über zwei galvanisch getrennte Energieversorgungskreise sichergestellt ist,
**dadurch gekennzeichnet, dass**
bei einer hydraulischen Lenkrad-Drehschieberlenkung die redundant ausgeführte Baugruppe das Zusammenspiel aus Hauptantriebsaggregat zum Antrieb der Hauptlenkpumpe und einer elektrisch getriebenen Notlenkpumpe ist, wobei
ein erster galvanisch getrennter Energieversorgungskreis einen Fahrzeugleitrechner und die Notlenkpumpe versorgt, während ein zweiter galvanisch getrennter Energieversorgungskreis eine Steuerung des Fahrzeughauptantriebes versorgt.

2. Fahrzeugsteuerung nach Anspruch 1, **dadurch gekennzeichnet, dass** die zwei galvanisch getrennten Energieversorgungskreise durch ein oder mehrere redundante Sicherungen und ein oder mehrere redundante Schaltrelais gebildet sind.

3. Fahrzeugsteuerung nach Anspruch 2, **dadurch gekennzeichnet, dass** ein gemeinsamer Zündschalter zur parallelen Schaltung der redundanten Relais vorgesehen ist, wobei der Zündschalter ohne galvanische Trennung mit der Energiequelle verbunden ist.

4. Fahrzeugsteuerung nach Anspruch 2, **dadurch gekennzeichnet, dass** redundante Zündschalter für die Schaltung der Energieversorgungskreise oder ein gemeinsamer Zündschalter mit zwei- oder mehrkreisig ausgeführten Schaltstellungen, die über eine gemeinsame Mechanik betätigbar sind, vorgesehen ist.

5. Fahrzeugsteuerung nach Anspruch 2, **dadurch gekennzeichnet, dass** in einem Energieversorgungskreis ein Zündschalter vorgesehen ist, der mit einer Logikeinheit eines weiteren Energieversorgungskreises kommunikativ verbunden ist.

6. Fahrzeugsteuerung nach Anspruch 5, **dadurch gekennzeichnet, dass** die Logikeinheit derart programmiert ist, so dass diese ein oder mehrere Schaltstellungen des Zündschalters und/oder Ein- bzw. Ausgänge des Zündschalters, insbesondere dessen Spannungsversorgung, überwacht.

7. Fahrzeugsteuerung nach Anspruch 6, **dadurch gekennzeichnet, dass** die Logikeinheit weiterhin die überwachten Werte prüft, vorzugsweise gegen eine gespeicherte Wahrheitstabelle vergleicht, und in Abhängigkeit der Prüfung einen Fehlerfall des Zündschalters bzw. des den Zündschalter enthaltenen Energieversorgungskreises erkennt.

8. Fahrzeugsteuerung nach Anspruch 7, **dadurch gekennzeichnet, dass** die Logikeinheit weiterhin die Energieversorgung einer oder mehrerer Baugruppen aus dem weiteren Energieversorgungskreis in Abhängigkeit des Prüfergebnisses schaltet, wobei vorzugsweise die eine oder mehreren Baugruppen zumindest teilweise individuell durch die Logikeinheit schaltbar sind.

9. Fahrzeugsteuerung nach einem der Ansprüche 5 bis 8, **dadurch gekennzeichnet, dass** die Logikeinheit einen Diagnoseausgang umfasst, vorzugsweise zur Anbindung an eine übergeordnete Steuerung, insbesondere den Fahrzeugleitrechner.

10. Mobile Arbeitsmaschine, insbesondere Baumaschine, mit einer Fahrzeugsteuerung gemäß einem der vorhergehenden Ansprüche 1 bis 9.

## Claims

1. A vehicle control for a mobile work machine, comprising:
a redundantly designed assembly; and
a common energy source for the energy supply of the assembly, wherein
the energy supply of the redundantly designed assembly is ensured via two galvanically separated energy supply circuits,
**characterized in that**
in a hydraulic steering wheel rotary vane steering system, the redundantly designed assembly is the interaction of the main drive unit to drive the main steering pump and an electrically driven emergency steering pump, wherein
a first galvanically separated energy supply circuit supplies a vehicle master computer and the emergency steering pump, while a second galvanically separated energy supply circuit supplies a control of the vehicle main drive.

2. A vehicle control in accordance with claim 1, **characterized in that** the two galvanically separated energy supply circuits are formed by one or more redundant fuses and one or more redundant switch relays.

3. A vehicle control in accordance with claim 2, **characterized in that** a common ignition switch is provided for a parallel switching of the redundant relays, with the ignition switch being connected to the energy source without galvanic separation.

4. A vehicle control in accordance with claim 2, **characterized in that** redundant ignition switches are provided for the switching of the energy supply circuits or a common ignition switch is provided having switching positions of two-circuit or multi-circuit design that can be actuated via a common mechanism.

5. A vehicle control in accordance with claim 2, **characterized in that** an ignition switch is provided in an energy supply circuit and is connected communication-wise to a logic unit of a further energy supply circuit.

6. A vehicle control in accordance with claim 5, **characterized in that** the logic unit is programmed such that it monitors one or more switch positions of the ignition switch and/or inputs or outputs of the ignition switch, in particular its voltage supply.

7. A vehicle control in accordance with claim 6, **characterized in that** the logic unit furthermore checks the monitored values, preferably compares them with a stored truth table, and recognizes an error event of the ignition switch or of the energy supply circuit containing the ignition switch in dependence on the check.

8. A vehicle control in accordance with claim 7, **characterized in that** the logic unit furthermore switches the energy supply of one or more assemblies from the further energy supply circuit in dependence on the check result, with the one or more assemblies preferably being switchable at least in part individually by the logic unit.

9. A vehicle control in accordance with one of the claims 5 to 8, **characterized in that** the logic unit comprises a diagnosis output, preferably for linking to a higher ranking control, in particular to the vehicle master computer.

10. A mobile work machine, in particular a construction machine, having a vehicle control in accordance with one of the preceding claims 1 to 9.

## Revendications

1. Commande de véhicule pour une machine de travail mobile, comprenant :
un ensemble réalisé de manière redondante, et
une source d'énergie commune destinée à l'alimentation en énergie de l'ensemble,
l'alimentation en énergie de l'ensemble réalisé de manière redondante étant assurée par le biais de deux circuits d'alimentation en énergie isolés galvaniquement,
**caractérisée en ce que**
pour une direction hydraulique à volant et tiroir rotatif, l'ensemble réalisé de manière redondante est la combinaison d'un équipement d'entraînement principal destiné à entraîner la pompe de direction principale et d'une pompe de direction de secours à actionnement électrique,
un premier circuit d'alimentation en énergie isolé galvaniquement alimentant un ordinateur central de véhicule et la pompe de direction de secours, pendant qu'un second circuit d'alimentation en énergie isolé galvaniquement alimente une commande de l'entraînement principal du véhicule.

2. Commande de véhicule selon la revendication 1, **caractérisée en ce que** les deux circuits d'alimentation en énergie isolés galvaniquement sont formés par un ou plusieurs fusibles redondants et un ou plusieurs relais tout-ou-rien redondants.

3. Commande de véhicule selon la revendication 2, **caractérisée en ce qu'**un interrupteur d'allumage commun est prévu pour la commutation en parallèle des relais redondants, l'interrupteur d'allumage étant raccordé à la source d'énergie sans isolation galvanique.

4. Commande de véhicule selon la revendication 2, **caractérisée en ce que** des interrupteurs d'allumage redondants pour la commutation des circuits d'alimentation en énergie ou un interrupteur d'allumage commun avec des positions de commutation réalisées à deux circuits ou à circuits multiples, qui peuvent être actionnées par une mécanique commune, sont prévus.

5. Commande de véhicule selon la revendication 2, **caractérisée en ce que**, dans un circuit d'alimentation en énergie, un interrupteur d'allumage est prévu, qui est raccordé à une unité logique d'un autre circuit d'alimentation en énergie de manière à pouvoir communiquer.

6. Commande de véhicule selon la revendication 5, **caractérisée en ce que** l'unité logique est programmée de manière à surveiller une ou plusieurs positions de commutation de l'interrupteur d'allumage et/ou des entrées ou sorties de l'interrupteur d'allumage, en particulier son alimentation en tension.

7. Commande de véhicule selon la revendication 6, **caractérisée en ce que** l'unité logique vérifie en outre les valeurs surveillées, les compare de préférence en se référant à une table de vérité enregistrée, et, en fonction de la vérification, détecte un état d'erreur de l'interrupteur d'allumage ou du circuit d'alimentation en énergie contenant l'interrupteur d'allumage.

8. Commande de véhicule selon la revendication 7, **caractérisée en ce que** l'unité de logique commute en outre l'alimentation en énergie d'un ou de plusieurs ensembles de l'autre circuit d'alimentation en énergie en fonction du résultat de la vérification, le ou les plusieurs ensembles pouvant être de préférence commutés par l'unité logique au moins en partie individuellement.

9. Commande de véhicule selon l'une des revendications 5 à 8, **caractérisée en ce que** l'unité logique comprend une sortie de diagnostic, de préférence pour le raccordement à une commande de niveau supérieur, en particulier à l'ordinateur central de véhicule.

10. Machine de travail mobile, en particulier machine de chantier, comprenant une commande de véhicule selon l'une des revendications précédentes 1 à 9.
